# FASCICULE DE BREVET EUROPEEN

(11) **EP 3 593 116 B1**
(45) Date de publication et mention de la délivrance du brevet: **29.06.2022**
(21) Numéro de dépôt: 18710537.4
(22) Date de dépôt: 06.03.2018
(51) Int. Cl.: G01N 19/02

(54) **PROCÉDÉ DE DÉTERMINATION DU COEFFICIENT DE FROTTEMENT STATIQUE POUR UNE SEMELLE DE CHAUSSURE**
VERFAHREN ZUR BESTIMMUNG DES STATISCHEN REIBUNGSKOEFFIZIENTEN FÜR EINE SCHUHSOHLE
METHOD FOR DETERMINING THE STATIC FRICTION COEFFICIENT FOR A SHOE SOLE

(30) Priorité: 08.03.2017 FR 1770224
(43) Date de publication de la demande: 15.01.2020
(73) Titulaire: COMPAGNIE GENERALE DES ETABLISSEMENTS MICHELIN, 63000 Clermont-Ferrand (FR)
(72) Inventeur: SOUYRI, Philippe, 63040 Clermont-Ferrand Cedex 9 (FR); IGIER, Emmanuel, 63040 Clermont-Ferrand Cedex 9 (FR)
(74) Mandataire: Boyer, Chris Michel
(86) Numéro de dépôt international: PCT/IB2018/051443
(87) Numéro de publication internationale: WO 2018/163069

(56) Documents cités:
- WO-A1-2010/125289
- CN-A- 105 606 527
- US-A- 3 535 911
- US-A1- 2012 240 660

## Description

### DOMAINE TECHNIQUE DE L'INVENTION

La présente invention concerne un procédé de détermination du coefficient de frottement statique d'une semelle de chaussure au moyen d'un banc de test. Elle prévoit également le banc de test correspondant.

### ETAT DE LA TECHNIQUE ANTERIEURE

La demande de brevet WO2004/051239 propose un procédé de mesure du coefficient de frottement d'un élément sur une surface à tester par rotation de l'élément en appui sur la surface à tester. Les conditions précises des mesures à réaliser ne sont pas précisées.

Le document FR2751748 décrit un procédé de caractérisation d'une surface en mesurant l'échauffement résultant du frottement entre un patin et la surface à tester.

La norme EN13287 décrit une méthode permettant de mesurer dans des conditions précises le niveau de résistance au glissement des chaussures de sécurité. La norme prévoit en outre l'application d'une vitesse de 300 mm/s entre la chaussure et la surface d'appui. Le document US20120240660 décrit un dispositif de mesure de friction comprenant une unité d'entraînement avec un élément moteur contrôlable, configurée pour recevoir une force de propulsion contrôlable et pour appliquer une force de traction à une éprouvette sur une surface. Un moteur applique la force de propulsion contrôlable. Un capteur de force se trouve entre l'unité d'entraînement et l'éprouvette. Le procédé décrit consiste à appliquer une force de traction croissante à une éprouvette au repos et à mesurer la force de traction. Le document CN105606527 décrit une méthode d'essai applicable à la mesure d'un coefficient de frottement statique de composants techniques. La méthode d'essai vise notamment à mesurer le coefficient de frottement statique d'un boîtier. Les échantillons sont soumis à une force constante jusqu'à ce que les échantillons soient dans un état de glissement les uns par rapport aux autres. Le document US3535911 décrit un procédé et un appareil de mesure permettant d'évaluer les forces de friction présentes entre deux surfaces de divers matériaux. Pour effectuer les mesures, les pièces à mesurer sont positionnées sur un dispositif adapté et sont soumises à des forces opposées afin de permettre des déplacements relatifs. Les forces présentes sont mesurées afin de déterminer les coefficients de friction statique et dynamique.

Dans ces différents documents, les conditions d'essais et les paramètres pris en compte lors des mesures ne permettent pas de mesurer de façon fiable, précise et répétitive les capacités des chaussures à éviter ou retarder l'entrée en mode glissement. Or, pour un grand nombre d'utilisation des chaussures, comme par exemple pour la sécurité, le sport, ou autre, cette caractéristique est plus appropriée pour évaluer les aptitudes des semelles à conserver leur adhérence le plus longtemps possible.

Pour pallier ces différents inconvénients, l'invention prévoit différents moyens techniques.

### EXPOSE DE L'INVENTION

Tout d'abord, un premier objectif de l'invention consiste à déterminer un moyen permettant de comparer de façon fiable, et avec un haut niveau de précision, les performances d'adhérence de diverses semelles de chaussures.

**Un** autre objectif de l'invention consiste à prévoir un moyen permettant de déterminer de façon fiable et avec un haut niveau de précision les performances anti-glissement d'une semelle de chaussure.

Encore un objectif de l'invention consiste à s'assurer que le point clé (maximum) permettant de déterminer avec grande précision le coefficient de frottement statique est assurément pris en compte dans tous les cas.

Encore un autre objectif de l'invention consiste à prévoir un moyen permettant d'évaluer ou quantifier les caractéristiques de chaussures en regard de certains usages spécialisés requérant des caractéristiques techniques spécifiques, tel que la sécurité (anti-glisse), l'escalade, le sport. Dans ce dernier cas, des mesures permettant d'évaluer les aptitudes au jeu sont recherchées.

Pour ce faire, l'invention prévoit un procédé de détermination du coefficient de frottement statique d'une semelle de chaussure au moyen d'un banc de test comprenant :
- une surface de mesure de caractéristiques de frottement connues et apte à supporter au moins une portion d'une semelle de chaussure à tester ;
- un membre d'appui produisant une force d'appui Fz de la semelle sur la surface de mesure sur laquelle la semelle à mesurer est posée ;
- un membre de traction apte à générer un déplacement entre la semelle et la surface de mesure (par action sur la semelle ou sur la surface de mesure) ;

ledit procédé comprenant les étapes selon lesquelles :
   - au moins une portion d'une semelle à tester, est positionnée sur la surface de mesure du banc de test ;
   - une force Fz d'appui de consigne est appliqué sur la semelle par le membre d'appui;
   - un déplacement du membre de traction est graduellement appliqué (de préférence avec maîtrise de la vitesse et asservissement en déplacement);
   - les valeurs de Fx et Fz sont enregistrées en temps réel à des intervalles de temps déterminés ;
   - le coefficient de frottement Mu statique est déterminé par identification de la valeur maximale du rapport Fx/Fz ;
la distance relative maximale parcourue entre deux points de mesure est de 0,01 à 0,1 mm, et plus préférentiellement de 0,01 à 0,05 mm et encore plus préférentiellement de 0,01 à 0,03 mm.

Contrairement aux procédés connus qui visent à détecter l'effort de résistance au glissement à vitesse stabilisée (en mode glissement, ce qui correspond à un coefficient de frottement dynamique), la présente méthode permet de déterminer le coefficient de frottement statique, qui est une valeur caractéristique particulièrement utile pour comparer les performances de semelles en regard de leur capacité à éviter d'entrer en mode de glissement. Les accidents dus au glissement survenant du fait d'une entrée en mode glissement, la valeur du Mu statique est beaucoup plus révélatrice des performances d'une semelle pour un sol donné.

La vitesse appliquée par le membre de traction est adaptée à la nature du sol et de la semelle utilisés (par exemple 0,02 m/s pour un sol classique). Elle est par ailleurs relativement faible pour faciliter les prises de mesures à des intervalles de déplacements relatifs les plus courts possibles. Ainsi, par rapport à la vitesse de déplacement spécifiée dans la norme EN13287, la vitesse est divisée par 15.

Le fait de prendre des mesures des valeurs de Fx et Fz à des intervalles de distance relativement courts, au lieu d'intervalles de temps, permet de s'assurer que tous les points pertinents, en particulier les points permettant de déterminer la valeur réelle effective maximale du rapport Fx/Fz font bien l'objet de mesures. D'autre part, le fait de cibler les mesures sur une distance relative parcourue entre la semelle et la surface de mesure plutôt qu'en fonction du temps, permet d'assurer l'efficacité du procédé en toutes circonstances. Plus particulièrement, le fait d'utiliser la distance (avec une distance très courte) en tant que consigne permet de s'assurer que le point maximum est bien pris en compte.

Le procédé prévoit avantageusement des capteurs de force pour les mesures des forces Fx et Fz, dans lequel les mesures Fx et Fz sont filtrées par un filtre passe bas appliqué à chacun des canaux de mesure.

Cette approche permet l'obtention de résultats plus précis, en particulier pour déterminer la valeur effective de Mu statique, car la recherche du point maximum sur une courbe doit se faire dans des conditions sans bruit.

Le filtre passe bas utilise avantageusement une moyenne flottante de chaque point à l'aide de ses points voisins correspondant à un intervalle de temps inférieur à 1 sec, et plus préférentiellement inférieur à 0,6 sec et encore plus préférentiellement inférieur à 0,3 sec. On utilise par exemple un jusqu'à une dizaine de points voisins.

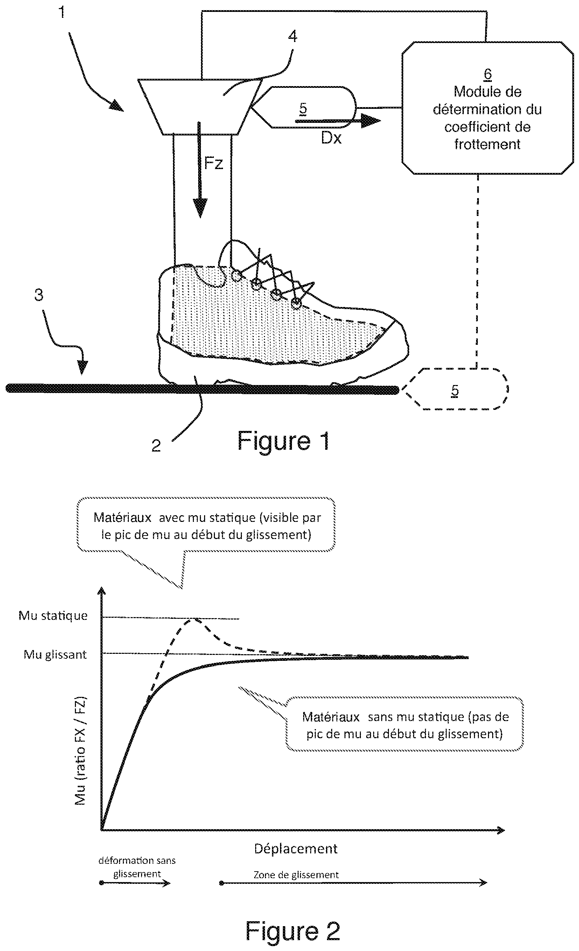

En variante, le procédé prévoit par ailleurs une étape de mesure du coefficient de frottement dynamique. Cette mesure correspond à la valeur de Fx/Fz en phase stabilisée (soit Mu glissant sur le graphique de la figure 2).

Ce mode de réalisation permet une mesure du coefficient de frottement dynamique particulièrement précise du fait que la valeur mesurée est bien décorrellée de la valeur préalablement obtenue du coefficient statique.

L'invention prévoit également un banc de test pour la détermination du coefficient de frottement statique d'une semelle de chaussure, comprenant :
- une surface de mesure dont les caractéristiques de frottement sont connues ;
- un membre d'appui susceptible de produire une force Fz d'appui de la semelle sur la surface de mesure sur laquelle la semelle à mesurer est posée ;
- un membre de traction apte à appliquer un déplacement Dx à un des éléments de l'ensemble de mesure, de préférence le membre d'appui (4) ou la surface de mesure ;
- des capteurs de force pour les mesures des forces Fx et Fz, dans lequel les mesures Fx et Fz sont effectuées en temps réel lors du déplacement Dx ;
- un module de détermination du coefficient de frottement statique de la semelle en cours de test, en liaison avec le membre d'appui et le membre de traction ; le module (6) de détermination du coefficient de frottement statique comprend des sous-modules d'enregistrement des valeurs de Fx et Fz en fonction du déplacement Dx du module de traction dans lequel la distance relative maximale parcourue entre deux points de mesure est de 0,1 mm, et plus préférentiellement de 0,03 mm, et encore plus préférentiellement de 0,01mm.

Egalement de manière avantageuse, le module de détermination du coefficient de frottement statique comprend un filtre passe bas appliqué à chacun des canaux de mesure. Le filtre passe bas permet de supprimer les bruits parasites de mesure qui rendent nombre de mesures brutes pratiquement inexploitables pour déterminer précisément le coefficient de frottement statique d'une semelle de chaussure.

Le filtre passe bas est de préférence adapté pour effectuer une moyenne de chaque point à l'aide de ses points voisins correspondant à un intervalle de temps inférieur à 1 sec, et plus préférentiellement inférieur à 0,6 sec et encore plus préférentiellement inférieur à 0,3 sec.

**Le** module de détermination du coefficient de frottement statique est apte à comparer les valeurs de Fx et Fz et de détecter la valeur maximale du rapport Fx/Fz pour un essai donné.

Selon le cas, le membre de traction agit sur le membre d'appui ou encore sur la surface de mesure, ou sur les deux. Dans le cas, l'action effectuée est préférentiellement en sens opposé. Le membre de traction permet d'obtenir un déplacement relatif de la semelle à mesurer par rapport à la surface de mesure.

### DESCRIPTION DES FIGURES

Tous les détails de réalisation sont donnés dans la description qui suit, complétée par les figures 1 et 2, présentées uniquement à des fins d'exemples non limitatifs, et dans lesquelles:
- la figure 1 est une représentation schématique d'un banc de test permettant la détermination du coefficient de frottement statique d'une semelle de chaussure ;
- la figure 2 présente un graphique illustrant un exemple de résultats susceptibles d'être obtenus avec un banc de test tel que celui de la figure 1, représentant des valeurs de coefficients de frottement statiques et dynamiques en fonction du déplacement.

### DESCRIPTION DETAILLEE DE L'INVENTION

La figure 1 est une représentation schématique d'un banc de test 1 pour la détermination du coefficient de frottement statique d'une semelle 2 de chaussure. Il comprend une surface de mesure 3. On prévoit de préférence une pluralité de surfaces de mesures interchangeables dont les caractéristiques de frottement varient, de façon à pouvoir procéder à des mesures représentatives de différents contextes d'utilisation, comme par exemple un sol céramique (sec ou mouillé), un sol bétonné, ou différentes surfaces telles que de la glace, du papier abrasif (par exemple P180), ou autres.

**La** surface de mesure est avantageusement sensiblement plane et agencée selon un plan sensiblement horizontal.

**Un** membre d'appui 4, prévu par exemple au-dessus de la surface de mesure 3, permet de produire une force Fz contre la semelle 2 que sorte que cette dernière appuie sur la surface de mesure 3 sur laquelle la semelle à mesurer est posée.

**Un** membre de traction 5, comme par exemple un vérin, est agencé pour appliquer un déplacement Dx à un des éléments de l'ensemble de mesure, dans l'exemple illustré, le membre d'appui 4. En variante, illustrée en trait pointillé, le déplacement Dx est appliqué à la surface de mesure 3.

Le banc de mesure comporte des capteurs de force pour les mesures des forces Fx et Fz. Ces capteurs sont intégrés et non visibles sur la figure. Divers types de capteurs de type connus, comme par exemple des capteurs piezo-électriques, peuvent être utilisés pour la mise en œuvre de ces fonctions de mesure.

**Le** banc de test prévoit par ailleurs un module 6 de détermination du coefficient de frottement statique de la semelle en cours de test. Ce module est en liaison avec le membre d'appui 4 et le membre de traction 5, afin de recevoir les données effectives pertinentes lors des phases de mesure. Il permet aussi de gérer et commander le membre d'appui 4 et le membre de traction 5.

Dans l'exemple illustré, afin de permettre de calculer les valeurs de Mu statique et de Mu dynamique, le module 6 de détermination du coefficient de frottement statique comprend des sous-modules d'enregistrement des valeurs de Fx et Fz en fonction du déplacement Dx du module de traction. Il comprend par ailleurs un filtre passe bas appliqué à chacun des canaux de mesure. Ce filtre est particulièrement utile et efficace pour supprimer les bruits parasites de mesure. Grâce à ce filtre, les résultats de calculs sont plus fiables et plus précis, et la valeur de Mu obtenue est particulièrement pertinente.

Le filtre passe bas est conçu effectuer une moyenne de chaque point à l'aide d'un nombre déterminé de points voisins. On choisit par exemple les points voisins sur un intervalle de temps inférieur à 1 sec, et plus préférentiellement inférieur à 0,6 sec et encore plus préférentiellement inférieur à 0,3 sec.

Le calcul de la valeur maximale du rapport Fx/Fz par le module 6 permet d'obtenir la valeur du coefficient de frottement statique pour un essai donné.

La distance relative maximale parcourue entre deux points de mesure est de 0,01 à 0,1 mm, et plus préférentiellement de 0,01 à 0,05 mm et encore plus préférentiellement de 0,01 à 0,03 mm.

### Numéros de référence employés sur les figures

- 1: Banc de test pour mesure de résistance au glissement
- 2: Semelle
- 3: Surface de mesure
- 4: Membre d'appui sur la semelle
- 5: Membre de traction
- 6: Module de détermination du coefficient de frottement

## Revendications

1. Procédé de détermination du coefficient de frottement statique d'une semelle (2) de chaussure au moyen d'un banc de test (1) comprenant :
- une surface de mesure (3) de caractéristiques de frottement connues et apte à supporter au moins une portion d'une semelle (2) de chaussure à tester ;
- un membre d'appui (4) produisant une force d'appui Fz de la semelle (2) sur la surface de mesure (3) sur laquelle la semelle à mesurer est posée ;
- un membre de traction (5) apte à générer un déplacement entre la semelle (2) et la surface de mesure (3) ;
ledit procédé comprenant les étapes selon lesquelles :
- au moins une portion d'une semelle (2) à tester, est positionnée sur la surface de mesure (3) du banc de test ;
- une force Fz d'appui de consigne est appliqué sur la semelle (2) par le membre d'appui (4);
- un déplacement du membre de traction (5) est graduellement appliqué;
- les valeurs de Fx et Fz sont enregistrées en temps réel à des intervalles de temps déterminés ;
- le coefficient de frottement Mu statique est déterminé par identification de la valeur maximale du rapport Fx/Fz ;
**caractérisé en ce que** la distance relative maximale parcourue entre deux points de mesure est de 0,01 à 0,1 mm, et plus préférentiellement de 0,01 à 0,05 mm et encore plus préférentiellement de 0,01 à 0,03 mm.

2. Procédé de mesure selon la revendication 1, utilisant des capteurs de force pour les mesures des forces Fx et Fz, dans lequel les mesures Fx et Fz sont filtrées par un filtre passe bas appliqué à chacun des canaux de mesure.

3. Procédé de mesure selon la revendication 2, dans lequel le filtre passe bas utilise une moyenne flottante de chaque point à l'aide de ses points voisins correspondant à un intervalle de temps inférieur à 1 sec, et plus préférentiellement inférieur à 0,6 sec et encore plus préférentiellement inférieur à 0,3 sec.

4. Procédé de mesure selon l'une des revendications précédentes, comprenant par ailleurs une étape de mesure du coefficient de frottement dynamique.

5. Banc de test (1) pour la détermination du coefficient de frottement statique d'une semelle (2) de chaussure, comprenant :
- une surface de mesure (3) dont les caractéristiques de frottement sont connues ;
- un membre d'appui (4) susceptible de produire une force Fz d'appui de la semelle (2) sur la surface de mesure (3) sur laquelle la semelle à mesurer est posée ;
- un membre de traction (5) apte à appliquer un déplacement Dx à un des éléments de l'ensemble de mesure, de préférence le membre d'appui (4) ou la surface de mesure (3) ;
- des capteurs de force pour les mesures des forces Fx et Fz, dans lequel les mesures Fx et Fz sont effectuées en temps réel lors du déplacement Dx ;
- un module (6) de détermination du coefficient de frottement statique de la semelle en cours de test, en liaison avec le membre d'appui (4) et le membre de traction (5) ; **caractérisé en ce que** le module (6) de détermination du coefficient de frottement statique comprend des sous-modules d'enregistrement des valeurs de Fx et Fz en fonction du déplacement Dx du module de traction dans lequel la distance relative maximale parcourue entre deux points de mesure est de 0,1 mm, et plus préférentiellement de 0,03 mm, et encore plus préférentiellement de 0,01mm.

6. Banc de test selon la revendication 5, dans lequel le module (6) de détermination du coefficient de frottement statique comprend un filtre passe bas appliqué à chacun des canaux de mesure.

7. Banc de test selon la revendication 6, dans lequel le filtre passe bas est adapté pour effectuer une moyenne de chaque point à l'aide de ses points voisins correspondant à un intervalle de temps inférieur à 1 sec, et plus préférentiellement inférieur à 0,6 sec et encore plus préférentiellement inférieur à 0,3 sec.

8. Banc de test (1) selon l'une quelconque des revendications 5 à 7, dans lequel le module (6) de détermination du coefficient de frottement statique est apte à comparer les valeurs de Fx et Fz et de détecter la valeur maximale du rapport Fx/Fz pour un essai donné.

## Patentansprüche

1. Verfahren zur Bestimmung des statischen Reibungskoeffizienten einer Schuhsohle (2) mit Hilfe eines Prüfstands (1), der Folgendes beinhaltet:
- eine Messfläche (3) mit bekannten Reibungseigenschaften, die dazu fähig ist, mindestens einen Abschnitt einer zu prüfenden Schuhsohle (2) aufzunehmen;
- ein Anpresselement (4), das eine Anpresskraft Fz der Sohle (2) auf die Messfläche (3), auf der die zu messende Sohle aufliegt, erzeugt;
- ein Zugelement (5), das dazu fähig ist, eine Bewegung zwischen der Sohle (2) und der Messfläche (3) zu generieren;
wobei das Verfahren die Schritte beinhaltet, gemäß denen:
- mindestens ein Abschnitt einer zu prüfenden Sohle (2) auf der Messfläche (3) des Prüfstands positioniert wird;
- durch das Anpresselement (4) eine Sollanpresskraft Fz auf die Sohle (2) aufgebracht wird;
- schrittweise eine Bewegung des Zugelements (5) aufgebracht wird;
- die Werte Fx und Fz in bestimmten Zeitintervallen in Echtzeit aufgezeichnet werden;
- der statische Reibungskoeffizient Mu durch Identifikation des maximalen Werts des Verhältnisses Fx/Fz bestimmt wird;
**dadurch gekennzeichnet, dass** der zwischen zwei Messpunkten zurückgelegte maximale relative Abstand 0,01 bis 0,1 mm und bevorzugter 0,01 bis 0,05 mm und noch bevorzugter 0,01 bis 0,03 mm beträgt.

2. Messverfahren nach Anspruch 1, das für die Messungen der Kräfte Fx und Fz Kraftsensoren verwendet, wobei die Messungen Fx und Fz von einem Tiefpassfilter gefiltert werden, das auf jeden der Messkanäle angewendet wird.

3. Messverfahren nach Anspruch 2, wobei das Tiefpassfilter einen gleitenden Mittelwert jedes Punkts mit Hilfe seiner benachbarten Punkte verwendet, die einem Zeitintervall kleiner als 1 s und bevorzugter kleiner als 0,6 s und noch bevorzugter kleiner als 0,3 s entsprechen.

4. Messverfahren nach einem der vorhergehenden Ansprüche, das ferner einen Schritt des Messens des dynamischen Reibungskoeffizienten beinhaltet.

5. Prüfstand (1) für die Bestimmung des statischen Reibungskoeffizienten einer Schuhsohle (2), der Folgendes beinhaltet:
- eine Messfläche (3), deren Reibungseigenschaften bekannt sind;
- ein Anpresselement (4), das eine Anpresskraft Fz der Sohle (2) auf die Messfläche (3), auf der die zu messende Sohle aufliegt, erzeugen kann;
- ein Zugelement (5), das dazu fähig ist, eine Bewegung Dx auf eines der Elemente der Messeinheit, vorzugsweise das Anpresselement (4) oder die Messfläche (3), aufzubringen;
- Kraftsensoren für die Messungen der Kräfte Fx und Fz, wobei die Messungen Fx und Fz während der Bewegung Dx in Echtzeit durchgeführt werden;
- ein Modul (6) zur Bestimmung des statischen Reibungskoeffizienten der in Prüfung befindlichen Sohle, das mit dem Anpresselement (4) und dem Zugelement (5) in Verbindung steht;
**dadurch gekennzeichnet, dass** das Modul (6) zur Bestimmung des statischen Reibungskoeffizienten Untermodule zum Aufzeichnen der Werte Fx und Fz in Abhängigkeit von der Bewegung Dx des Zugmoduls beinhaltet, wobei der zwischen zwei Messpunkten zurückgelegte maximale relative Abstand 0,1 mm beträgt und bevorzugter 0,03 mm beträgt und noch bevorzugter 0,01 mm beträgt.

6. Prüfstand nach Anspruch 5, wobei das Modul (6) zur Bestimmung des statischen Reibungskoeffizienten ein Tiefpassfilter beinhaltet, das auf jeden der Messkanäle angewendet wird.

7. Prüfstand nach Anspruch 6, wobei das Tiefpassfilter dazu angepasst ist, einen Mittelwert jedes Punkts mit Hilfe seiner benachbarten Punkte zu bilden, die einem Zeitintervall kleiner als 1 s und bevorzugter kleiner als 0,6 s und noch bevorzugter kleiner als 0,3 s entsprechen.

8. Prüfstand (1) nach einem der Ansprüche 5 bis 7, wobei das Modul (6) zur Bestimmung des statischen Reibungskoeffizienten dazu fähig ist, die Werte Fx und Fz zu vergleichen und den maximalen Wert des Verhältnisses Fx/Fz für einen gegebenen Test zu ermitteln.

## Claims

1. Method for determining the static friction coefficient of a shoe sole (2) using a test bed (1) comprising:
- a measuring surface (3) with known friction features and that is capable of supporting at least one portion of a shoe sole (2) to be tested;
- a bearing member (4) producing a bearing force Fz on the sole (2) on the measuring surface (3) on which the sole to be measured is placed;
- a traction member (5) capable of generating a movement between the sole (2) and the measuring surface (3);
said method comprising the following steps:
- positioning at least one portion of a sole (2) to be tested on the measuring surface (3) of the test bed;
- applying a setpoint bearing force Fz on the sole (2) using the bearing member (4);
- gradually causing a movement to be applied to the traction member (5);
- recording the values of Fx and Fz in real time at determined time intervals;
- determining the statistical friction coefficient Mu by identifying the maximum value of the Fx/Fz ratio;
**characterized in that** the maximum relative distance covered between two measuring points is from 0.01 to 0.1 mm, and more preferably from 0.01 to 0.05 mm, and even more preferably from 0.01 to 0.03 mm.

2. Measuring method according to Claim 1, using force sensors for measuring the forces Fx and Fz, wherein the Fx and Fz measurements are filtered by a low-pass filter applied to each of the measuring channels.

3. Measuring method according to Claim 2, wherein the low-pass filter uses a moving average of each point using its neighbouring points corresponding to a time interval of less than 1 second, and more preferably of less than 0.6 seconds, and even more preferably of less than 0.3 seconds.

4. Measuring method according to any of the preceding claims, further comprising a step of measuring the dynamic friction coefficient.

5. Test bed (1) for determining the static friction coefficient of a shoe sole (2) comprising:
- a measuring surface (3), the friction features of which are known;
- a bearing member (4) capable of producing a bearing force Fz on the sole (2) on the measuring surface (3) on which the sole to be measured is placed;
- a traction member (5) capable of causing a movement Dx to be applied to one of the elements of the measuring assembly, preferably the bearing member (4) or the measuring surface (3);
- force sensors for measuring the forces Fx and Fz, wherein the Fx and Fz measurements are carried out in real time during the movement Dx;
- a module (6) for determining the static friction coefficient of the sole being tested, which module is connected to the bearing member (4) and the traction member (5);
**characterized in that** the module (6) for determining the static friction coefficient comprises sub-modules for recording values of Fx and Fz as a function of the movement Dx of the traction module in which the maximum relative distance covered between two measuring points is 0.1 mm, and more preferably is 0.03 mm, and even more preferably is 0.01 mm.

6. Test bed according to Claim 5, wherein the module (6) for determining the static friction coefficient comprises a low-pass filter applied to each of the measuring channels.

7. Test bed according to Claim 6, wherein the low-pass filter is adapted to complete an average of each point using its neighbouring points corresponding to a time interval of less than 1 second, and more preferably of less than 0.6 seconds, and even more preferably of less than 0.3 seconds.

8. Test bed (1) according to any of Claims 5 to 7, wherein the module (6) for determining the static friction coefficient is capable of comparing the values of Fx and Fz and of detecting the maximum value of the Fx/Fz ratio for a given test.
